# EUROPEAN PATENT SPECIFICATION

(11) **EP 2 653 376 B1**
(45) Date of publication and mention of the grant of the patent: **23.03.2016**
(21) Application number: 12382152.2
(22) Date of filing: 18.04.2012
(51) Int. Cl.: B64C 1/14, B64C 3/34, B64D 37/14, F16B 5/02

(54) **BOLTED JOINT OF THE COVER OF AN ACCESS OPENING IN AN AIRCRAFT LIFTING SURFACE**
Bolzenverbindung des Deckels einer Zugangsöffnung in einer Flugzeughebefläche
Raccord boulonné du couvercle d'une ouverture d'accès dans une surface de levage d'un avion

(43) Date of publication of application: 23.10.2013
(73) Proprietor: Airbus Operations, S.L., 28906 Getafe Madrid (ES)
(72) Inventor: Alazraki, Marcos, 28906 Getafe (ES); Sanz Torrijos, José, 28906 Getafe (ES)
(74) Representative: Elzaburu Marquez, Alberto

(56) References cited:
- EP-A1- 0 170 300
- FR-A1- 2 828 246
- US-A- 3 357 730

## Description

### FIELD OF THE INVENTION

The present invention relates to lifting surfaces of aircraft and, more particularly, to a lifting surface having a primary structure presenting an opening, said opening being covered by a cover such as the cover (see e.g. document US3357730) of a fuel tank access opening in the lower wing skin of an aircraft.

### BACKGROUND OF THE INVENTION

The design of the cover of the access opening of a fuel tank which is mounted in the wing of an aircraft shall, at least, meet the following requirements:
- Provide a reliable seal to prevent leakage from the fuel tank.
- Facilitate its removal for maintenance purposes.
- Have a low weight.
- Have an adequate structural strength.

As the wing of the aircraft deflects upwardly and downwardly under aerodynamic loads, the lower skin of the wing where the access opening to the fuel tank is located and its cover are subjected to deflections that affect the design of the attachment of the cover to the skin of the wing.

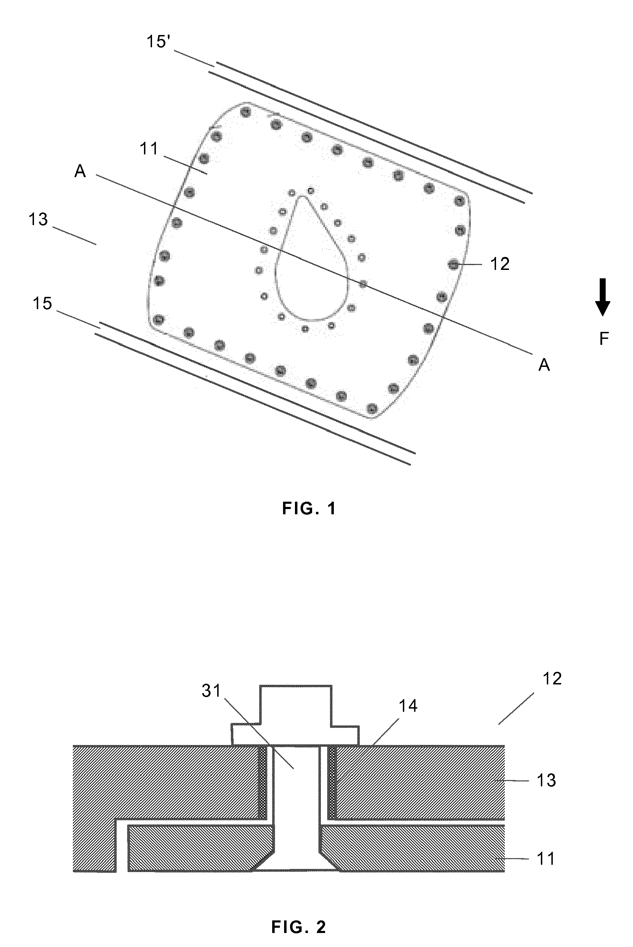

Figure 1 schematically shows the cover 11 of a fuel tank access opening which is joined to the lower skin 13 of the wing by means of bolted joints 12 according to the prior art and Figure 2 shows a cross section of one bolted joint 12.

The cover 11 has a symmetry axis A-A in the direction of the span of the wing substantially parallel to the reinforcing stringers 15, 15' of the lower skin 13 of the wing.

As can be seen in Figure 2, there is a hole clearance between a bushing 14 joined to the lower skin 13 and the bolt 31, whereas the cover 11 has a countersunk hole with no hole clearances. This means that the cover 11 moves with the bolt 31 (to which it is fixed) with respect to the lower skin 13.

Ideally the cover 11 should not support loads. For this to happen, the bolts 31 of the joints 12 must not contact the bushings 14 of the lower skin 13. Otherwise, loads would be transmitted from the lower skin 13 to the cover 11.

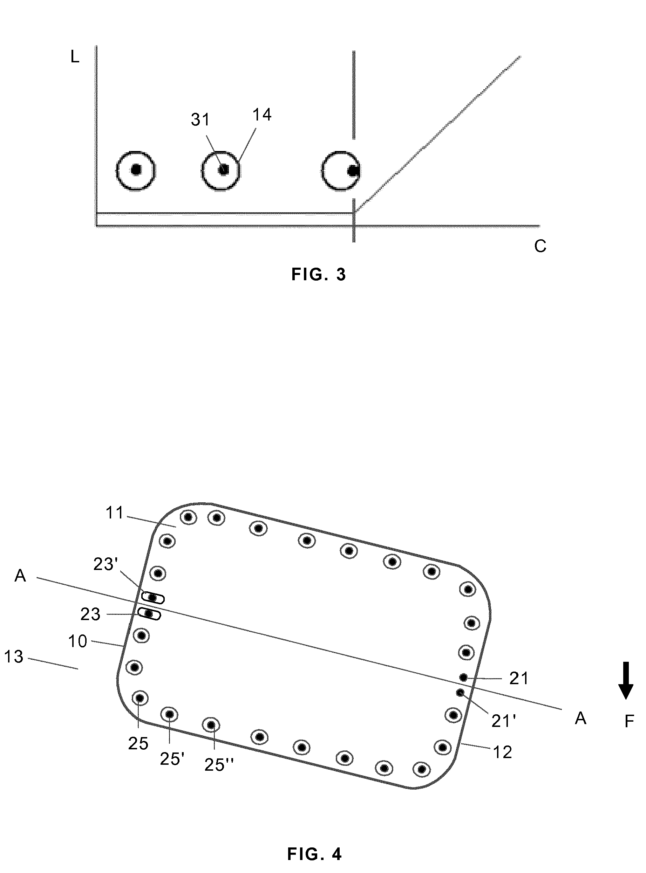

Due to the bending moments supported by the wings, the bolts 31 can enter into contact with the bushings 14 of the lower skin 13, thus cancelling the hole clearance of the joints 12 on one side. When the hole clearance of a joint 12 is cancelled on one side, the cover 11 starts to take loads. This is illustrated in Figure 3: when a bolt 31 is floating inside the hole in a bushing 14 of the lower skin 13, the loads L transmitted from the lower skin 13 to the cover 11 are insignificant, but as soon as the bolt 31 touches the bushing 14 of the lower skin 13 on one side, the loads L transmitted from the lower skin 13 to the cover 11 increase dramatically. Consequently, the cover 11 has to be reinforced, with a corresponding increase in weight due to the fact that it does end up carrying loads.

### SUMMARY OF THE INVENTION

It is an object of the present invention to provide an aircraft lifting surface (such as a skin of an aircraft wing) having an opening, comprising a cover for covering the opening (such as a cover of an opening in the skin of the aircraft wing) that avoids the transmission of loads from the primary structure to the cover, and that allows reducing the weight of the cover structure.

These and another objects are met by the lifting surface presenting the features of claim 1.

In one embodiment the first, second and third bolted joints comprise a bolt with a bushing fixed to it having the same length L than the width W of the cover.

Advantageously the hole in the cover and the bushing in the second bolted joints are configured, respectively, with frontal facing surfaces having a frontal clearance Cf between them and with lateral facing surfaces having a linear clearance Cx between them in the direction of said symmetry axis A-A.

Advantageously the hole in the cover and the bushing in the third bolted joints are configured, respectively, with frontal facing surfaces having a frontal clearance Cf between them and with lateral facing surfaces having a radial clearance Cx between them.

Other desirable features and advantages of the lifting surface according to this invention will become apparent from the subsequent detailed description of the invention and the appended claims, in relation with the enclosed drawings.

### DESCRIPTION OF THE FIGURES

Figure 1 is a plan view of a cover of a fuel tank access opening in a lower skin of the wing of an aircraft according to the prior art.
Figure 2 is a section view of one of the joints between said cover and said lower skin.
Figure 3 is a diagram showing the relation between the load L transferred from the lower skin to the cover and the clearance C in the joints shown in Figures 1 and 2.
Figure 4 is a plan view of a cover of a fuel tank access opening in a lower skin of the wing of an aircraft according to the present invention.
Figure 5 is a section view of one embodiment of a joint between said cover and said lower skin according to the present invention.
Figures 6a and 6b are schematic views of joints with linear and radial clearances.
Figure 7 is a section view of another embodiment of a joint between said cover and said lower skin according to the present invention.

### DETAILED DESCRIPTION OF THE INVENTION

Figure 4 illustrates the bolted joint of the cover 11 of a fuel tank access opening in the lower skin 13 of the wing of an aircraft as an example of a bolted joint of a cover of an opening in a primary structure of a lifting surface of an aircraft according to this invention.

The bolted joint comprises:
- Two first fixed bolted joints 21, 21' on either side of the axis A-A on the side 12 of the cover 11 farthest from the root of the wing (and closest to the incoming flow F). The axis A-A is the symmetry axis of the cover 11 in the wing span direction. The displacements of the lower skin 13 of the wing due to the aerodynamic loads increase along its span.
- Two second bolted joints 23, 23' on the side 10 of the cover 11 closest from the wing root (and farthest from the incoming flow) without any clearance in the holes of the lower skin 13 and with a clearance in the holes of the cover 11 only in the direction of said symmetry axis A-A.
- A plurality of third bolted joints 25, 25', 25", ... on the border of the cover 11 without any clearance in the holes of the lower skin 13 and with a radial clearance in the holes of the cover 11.

The fixed bolted joints 21, 21' ensure that the cover 11 moves with the lower skin 13 of the wing.

These fixed bolted joints 21, 21' transmit the loads carried by the lower skin 13 of the wing to the cover 11, but the cover 11 will not carry said loads (and must not be reinforced) unless these loads can be transmitted back to the lower skin 13 through the rest of the bolted joints of the cover 11. In other words, the cover 11 will only carry loads if loads are transmitted from the lower skin 13 to the cover 11 through an entry point and back to the lower skin 13 through an exit point.

In order to avoid this load transfer, the second bolted joints 23, 23' and the third bolted joins 25, 25', 25", ... have clearances in the holes of the cover 11 avoiding the contact of the bolts 31 with the cover 11.

These clearances must never be cancelled by the displacement of the lower skin 13 of the wing due to the aerodynamic loads. This means that the clearances must have the dimensions needed for more than compensating the maximum displacement of the lower skin 13 with respect to the fixed bolted joints 21, 21'.

The fixed bolted joints 21, 21' provide a reference point because the cover 11 is able to return to a home position each time due to the second bolted joints 23, 23', so that the maximum displacements of the cover 11 are limited. Otherwise, the cover 11 could shift in position each time and end at a different home position involving the risk of a situation without a clearance in some of the third bolted joints 25, 25', 25".

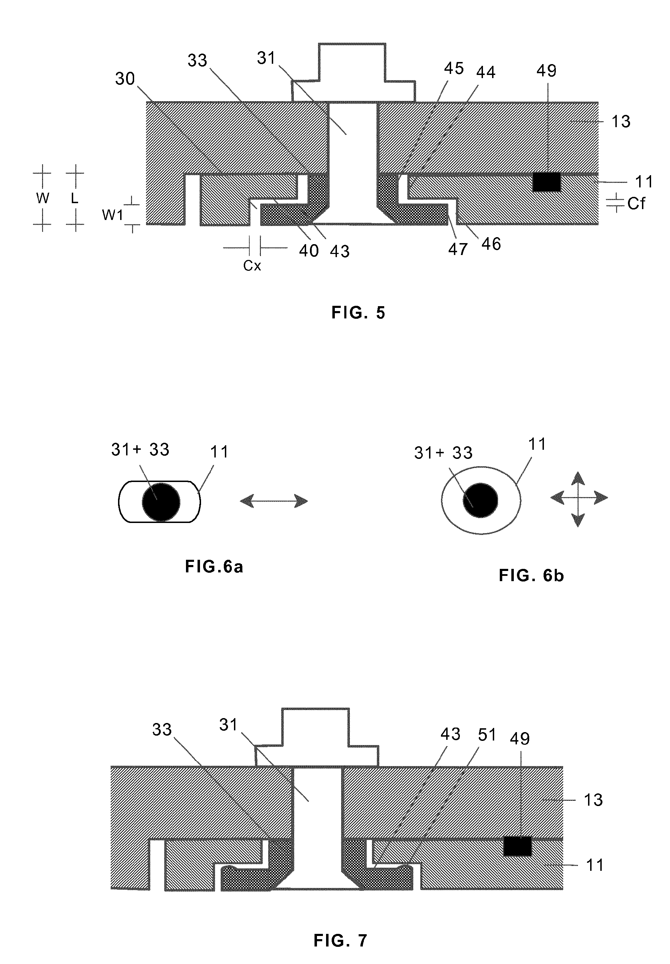

Figure 5 illustrates an embodiment of a bolted joint with clearances in the cover 11 according to this invention.

The hole in the lower skin 13 does not have any clearance with respect to the bolt 31.

The bolt 31 has a bushing 33 fixed to it, being the length L of the bushing 33 substantially equal to the width W of the cover 11.

The bushing 33 must be light, conduct electricity and avoid corrosion problems. It can be made of one of the following materials: PEEK, Aluminum, stainless steel or Polyphenylene sulphide (PPS).

The hole 30 and the bushing 33 are configured, respectively, with lateral facing surfaces 44, 46; 45, 47 having a lateral clearance Cx between them and with frontal facing surfaces 40, 43 having a frontal clearance Cf between them.

The lateral clearance Cx corresponds to the above mentioned clearances that enable the cover 11 not to take loads from the lower skin 13.

In the case of a second bolted joint 23, 23' the lateral clearance Cx is a clearance restricted in a linear direction. Figure 6a schematically shows the clearance between the bolt 31 with the bushing 33 and the cover 11 in these joints allowing one degree of translational freedom.

In the case of a third bolted joint 25, 25', 25", the lateral clearance Cx is a radial clearance. Figure 6b schematically shows the clearance between the bolt 31 with the bushing 33 and the cover 11 in these joints allowing two degrees of translational freedom.

The frontal clearance Cf allows the implementation of a low friction surface between the frontal facing surfaces 43, 40 of the bushing 33 and the cover 11 for facilitating relative horizontal displacements between said surfaces.

Several techniques may be used for implementing said low friction surface, for example attaching a Teflon pad (not shown in Figure 6) to one of the facing surfaces 43, 40.

In addition, the frontal surface 43 of the bushing 33 may be configured with a rounded protruding edge 51 (see Figure 7) that provides a contact point between both frontal facing surfaces regardless of the contact angle between them, helping their relative displacements.

As shown in Figures 5 and 7, the bolted joints according to this invention also comprise a seal 49 avoiding fuel leaks but allowing relative displacements between the lower skin 13 and the cover 11.

The lifting surface according to this invention provides a reduction of the weight and the cost of the cover and is particularly applicable to a cover and a primary structure made of a composite material.

Although the present invention has been described in connection with various embodiments, it will be appreciated from the specification that various combinations of elements, variations or improvements therein may be made, and are within the scope of the invention.

## Claims

1. Lifting surface of an aircraft having a primary structure (13) having an opening, the lifting surface further comprising:
- a cover (11) for covering the opening of the primary structure (13), and
- a bolted joint for connecting the cover (11) to said primary structure (13), the cover (11) having a symmetry axis (A-A) in the direction of the span of said lifting surface, where the bolted joint comprises:
- two first bolted joints (21, 21') on either side of the symmetry axis (A-A) on the side of the cover (11) closest to the root of the lifting surface or on the side of the cover (11) farthest from the root of the lifting surface, arranged without any clearance in the holes of the primary structure (13) and in the holes of the cover (11);
the lifting surface being **characterized in that** the bolted joint further comprises:
- two second bolted joints (23, 23') on either side of the symmetry axis (A-A) on the side of the cover (11) opposite to that of the two first bolted joints (21, 21'), arranged without any clearance in the holes of the primary structure (13) and with a clearance in the holes (30) of the cover (11) in the direction of said symmetry axis (A-A);
- a plurality of third bolted joints (25, 25', 25", ...) along the border of the cover (11) arranged without any clearance in the holes of the primary structure (13) and with a radial clearance in the holes (30) of the cover (11).

2. Lifting surface according to claim 1, wherein:
- each first bolted joint (21, 21') comprises a bolt (31) with a bushing (33) fixed to it having the same length (L) than the width (W) of the cover (11);
- the hole (30) in the cover (11) and the bushing (33) are configured without any clearance between them.

3. Lifting surface according to any of claims 1-2, wherein:
- each second bolted joint (23, 23') comprises a bolt (31) with a bushing (33) fixed to it having the same length (L) than the width (W) of the cover (11);
- the hole (30) in the cover (11) and the bushing (33) are configured with a linear clearance between them in the direction of said symmetry axis (A-A).

4. Lifting surface according to claim 3, wherein said bushing (33) and said hole (30) are configured, respectively, with frontal facing surfaces (43, 40) having a frontal clearance (Cf) between them and with lateral facing surfaces (45, 47; 44, 46) having a linear clearance (Cx) between them in the direction of said symmetry axis (A-A).

5. Lifting surface according to any of claims 1-4, wherein:
- each third bolted joint (25, 25', 25") comprises a bolt (31) with a bushing (33) fixed to it having the same length (L) than the width (W) of the cover (11)
- the hole (30) in the cover (11) and the bushing (33) are configured with a radial clearance between them.

6. Lifting surface according to claim 5, wherein said bushing (33) and said hole (30) are configured, respectively, with frontal facing surfaces (43, 40) having a frontal clearance (Cf) between them and with lateral facing surfaces (45, 47; 44, 46) having a radial clearance (Cx) between them.

7. Lifting surface according to claim 6, wherein the frontal facing surface (43) of the bushing (33) has a rounded protruding edge (51).

8. Lifting surface according to any of claims 1-7, wherein said bushing (33) is made of one of the following materials: PEEK, Aluminum, Stainless Steel, PPS.

9. Lifting surface according to any of claims 1-8, wherein said cover (11) and said primary structure (13) are made of a composite material.

10. Lifting surface according to any of claims 1-9, wherein said opening in a primary structure (13) is the access opening of a fuel tank in the lower skin of a wing.

## Patentansprüche

1. Tragfläche eines Flugzeugs mit einer Hauptstruktur (13) mit einer Öffnung, wobei die Tragfläche ferner aufweist:
- eine Abdeckung (11) zum Abdecken der Öffnung der Hauptstruktur (13); und
- eine Bolzenverbindung zum Verbinden der Abdeckung (11) mit der Hauptstruktur (13), wobei die Abdeckung (11) eine Symmetrieachse (A-A) in Richtung der Spannweite der Tragfläche aufweist,
wobei die Bolzenverbindung aufweist:
- zwei erste Bolzenverbindungen (21, 21') auf beiden Seiten der Symmetrieachse (A-A) auf der der Wurzel der Tragfläche zugewandten Seite der Abdeckung (11) oder auf der der Wurzel der Tragfläche abgewandten Seite der Abdeckung (11), die ohne jegliches Spiel in Löchern der Hauptstruktur (13) und in Löchern der Abdeckung (11) angeordnet sind,
wobei die Tragfläche **dadurch gekennzeichnet ist, dass** die Bolzenverbindung ferner aufweist:
- zwei zweite Bolzenverbindungen (23, 23') auf beiden Seiten der Symmetrieachse (A-A) auf der Seite der Abdeckung, die der Seite gegenüberliegt, auf der die beiden ersten Bolzenverbindungen (21, 21') angeordnet sind, wobei die zweiten Bolzenverbindungen ohne jegliches Spiel in Löchern der Hauptstruktur (13) und mit Spiel in Löchern (30) der Abdeckung (11) in Richtung der Symmetrieachse (A-A) angeordnet sind; und
- mehrere dritte Bolzenverbindungen (25, 25', 25", ...) entlang der Grenze der Abdeckung (11), die ohne jegliches Spiel in Löchern der Hauptstruktur (13) und mit radialem Spiel in Löchern (30) der Abdeckung (11) angeordnet sind.

2. Tragfläche nach Anspruch 1, wobei:
- jede erste Bolzenverbindung (21,21') einen Bolzen (31) mit einer daran befestigten Buchse (33) aufweist, die eine Länge (L) hat, die der Breite (W) der Abdeckung (11) gleicht; und
- das Loch (30) in der Abdeckung (11) und die Buchse (33) ohne jegliches Spiel dazwischen konfiguriert sind.

3. Tragfläche nach Anspruch 1 oder 2, wobei:
- jede der zweiten Bolzenverbindungen (23, 23') einen Bolzen (31) mit einer daran befestigten Buchse (33) aufweist, die eine Länge (L) hat, die der Breite (W) der Abdeckung (11) gleicht; und
- das Loch (30) in der Abdeckung (11) und die Buchse (33) mit einem linearen Spiel dazwischen in der Richtung der Symmetrieachse (A-A) konfiguriert sind.

4. Tragfläche nach Anspruch 3, wobei die Buchse (33) und das Loch (30) jeweils mit vorderseitigen Flächen (43, 40) mit einem vorderseitigen Spiel (Cf) dazwischen und mit lateralen Flächen (45, 47; 44, 46) mit einem linearen Spiel (Cx) dazwischen in Richtung der Symmetrieachse (A-A) konfiguriert sind.

5. Tragfläche nach einem der Ansprüche 1 bis 4, wobei
- jede der dritten Bolzenverbindungen (25, 25', 25") einen Bolzen (31) mit einer daran befestigten Buchse (33) aufweist, die eine Länge (L) hat, die der Breite (W) der Abdeckung (11) gleicht, und
- das Loch (30) in der Abdeckung (11) und die Buchse (33) mit einem radialen Spiel dazwischen konfiguriert sind.

6. Tragfläche nach Anspruch 5, wobei die Buchse (33) und das Loch (30) jeweils mit vorderseitigen Flächen (43, 40) mit einem vorderseitigen Spiel (Cf) dazwischen und mit lateralen Flächen (45, 47; 44, 46) mit einem radialen Spiel (Cx) dazwischen konfiguriert sind.

7. Tragfläche nach Anspruch 6, wobei die vorderseitige Fläche (43) der Buchse (33) einen abgerundeten hervorstehenden Rand (51) aufweist.

8. Tragfläche nach einem der Ansprüche 1 bis 7, wobei die Buchse aus einem der folgenden Materialien hergestellt ist: PEEK, Aluminium, rostfreier Stahl, PPS.

9. Tragfläche nach einem der Ansprüche 1 bis 8, wobei die Abdeckung (11) und die Hauptstruktur (13) aus einem Verbundmaterial hergestellt sind.

10. Tragfläche nach einem der Ansprüche 1 bis 9, wobei die Öffnung in der Hauptstruktur (13) die Zugangsöffnung eines Kraftstofftanks in der unteren Außenhaut eines Flügels ist.

## Revendications

1. Surface portante d'un aéronef ayant une structure primaire (13) ayant une ouverture, la surface portante comprenant en outre :
- un couvercle (11) pour couvrir l'ouverture de la structure primaire (13), et
- un assemblage boulonné pour relier le couvercle (11) à ladite structure primaire (13), le couvercle (11) ayant un axe de symétrie (A-A) dans la direction de l'envergure de ladite surface portante,
où
- deux premiers assemblages boulonnés (21, 21') sur chaque côté de l'axe de symétrie (A-A) sur le côté du couvercle (11) le plus proche de l'emplanture de la surface portante ou sur le côté du couvercle (11) le plus éloigné de l'emplanture de la surface portante, agencés sans aucun jeu dans les trous de la structure primaire (13) et dans les trous du couvercle (11) ;
la surface portante étant **caractérisée en ce que** l'assemblage boulonné comprend en outre :
- deux deuxièmes assemblages boulonnés (23, 23') sur les deux côtés de l'axe de symétrie (A-A) sur le côté du couvercle (11) opposé à celui des deux premiers assemblages boulonnés (21, 21'), agencés sans aucun jeu dans les trous de la structure primaire (13) et avec un jeu dans les trous (30) du couvercle (11) dans la direction dudit axe de symétrie (A-A) ;
- une pluralité de troisièmes assemblages boulonnés (25, 25', 25",...) le long du bord du couvercle (11) agencés sans aucun jeu dans les trous de la structure primaire (13) et avec un jeu radial dans les trous (30) du couvercle (11).

2. Surface portante selon la revendication 1, dans laquelle :
- chaque premier assemblage boulonné (21, 21') comprend un boulon (31) avec une douille (33) fixée à celui-ci ayant la même longueur (L) que la largeur (W) du couvercle (11) ;
- le trou (30) dans le couvercle (11) et la douille (33) sont configurés sans aucun jeu entre eux.

3. Surface portante selon l'une des revendications 1 à 2, dans laquelle :
- chaque deuxième assemblage boulonné (23, 23') comprend un boulon (31) avec une douille (33) fixée à celui-ci ayant la même longueur (L) que la largeur (W) du couvercle (11) ;
- le trou (30) dans le couvercle (11) et la douille (33) sont configurés avec un jeu linéaire entre eux dans la direction dudit axe de symétrie (A-A).

4. Surface portante selon la revendication 3, dans laquelle ladite douille (33) et ledit trou (30) sont configurés, respectivement, avec des surfaces orientées frontalement (43, 40) ayant un jeu frontal (Cf) entre elles et avec des surfaces orientées latéralement (45, 47 ; 44, 46) ayant un jeu linéaire (Cx) entre elles dans la direction dudit axe de symétrie (A-A).

5. Surface portante selon l'une des revendications 1 à 4, dans laquelle :
- chaque troisième assemblage boulonné (25, 25', 25") comprend un boulon (31) avec une douille (33) fixée à celui-ci ayant la même longueur (L) que la largeur (W) du couvercle (11)
- le trou (30) dans le couvercle (11) et la douille (33) sont configurés avec un jeu radial entre eux.

6. Surface portante selon la revendication 5, dans laquelle ladite douille (33) et ledit trou (30) sont configurés, respectivement, avec des surfaces orientées frontalement (43, 40) ayant un jeu frontal (Cf) entre elles et avec des surfaces orientées latéralement (45, 47 ; 44, 46) ayant un jeu radial (Cx) entre elles.

7. Surface portante selon la revendication 6, dans laquelle la surface orientée frontalement (43) de la douille (33) présente un bord saillant arrondi (51).

8. Surface portante selon l'une des revendications 1 à 7, dans laquelle ladite douille (33) est réalisée en l'un des matériaux suivants : PEEK, Aluminium, Acier Inoxydable, PPS.

9. Surface portante selon l'une des revendications 1 à 8, dans laquelle ledit couvercle (11) et ladite structure primaire (13) sont réalisés en un matériau composite.

10. Surface portante selon l'une des revendications 1 à 9, dans laquelle ladite ouverture dans une structure primaire (13) est l'ouverture d'accès d'un réservoir de carburant dans le revêtement inférieur d'une aile.
